# EUROPEAN PATENT APPLICATION

(11) **EP 4 387 281 A1**
(43) Date of publication of application: **19.06.2024**
(21) Application number: 23214123.4
(22) Date of filing: 04.12.2023
(51) Int. Cl.: H04W 4/02, G08G 1/005, G08G 1/16, H04W 4/40

(54) **IMPROVED CLUSTER BREAK UP MANAGEMENT WITHIN AN INTELLIGENT TRANSPORT SYSTEM**

(30) Priority: 14.12.2022 GB 202218902
(71) Applicant: CANON KABUSHIKI KAISHA, Tokyo 146-8501 (JP)
(72) Inventor: MORVAN, Isabelle, 35135 CHANTEPIE (FR); LE HOUEROU, Brice, 35690 ACIGNE (FR); NASSOR, Eric, 35235 THORIGNE-FOUILLARD (FR)
(74) Representative: Santarelli

(57) **Abstract**

At least one embodiment of a method of communication in an intelligent transport system, ITS, the method, to be carried out at a vulnerable road user, VRU, ITS station, VRU ITS-S, belonging to a cluster of VRUs, comprising determining that the VRU cluster has been at least partially reported in a collective perception message, CPM and setting an operating mode of the VRU ITS-S to a VRU passive mode comprising refraining the VRU ITS-S from broadcasting VRU awareness messages, VAMs, for a time period.

## Description

### FIELD OF THE DISCLOSURE

The present disclosure relates generally to Intelligent Transport Systems (ITS) and more specifically to Cooperative Intelligent Transport Systems (C-ITS).

### BACKGROUND OF DISCLOSURE

Cooperative Intelligent Transport Systems (C-ITS) is an emerging technology for future transportation management that aims at improving road safety, traffic efficiency and driver experience.

Intelligent Transport Systems (ITS), as defined by the European Telecommunications Standards Institute (ETSI), include various types of communication such as:
- communications between vehicles (e.g., car-to-car), and
- communications between vehicles and fixed locations (e.g., car-to-infrastructure).

C-ITS are not restricted to road transport as such. More generally, C-ITS may be defined as the use of information and communication technologies (ICT) for rail, water and air transport, including navigation systems. Such various types of C-ITS generally rely on radio services for communication and use dedicated technologies.

Such C-ITS are subject to standards, specified for each country and/or territory where C-ITS are implemented. Today in Europe, the European Telecommunications Standards Institute is in charge of the elaboration of the specifications forming the standards to which C-ITS are subjected.

Cooperation within C-ITS is achieved by exchange of messages, referred to as ITS messages, among ITS stations (denoted ITS-Ss). The ITS-Ss may be vehicles, Road Side Units (RSUs), Vulnerable Road Users (VRUs) carrying an ITS equipment (for instance included in a smartphone, a GPS, a smart watch, or in a cyclist equipment), or any other entities or infrastructures equipped with an ITS equipment, as well as central subsystems (back-end systems and traffic management centers).

C-ITS may support various types of communications, for instance between vehicles (vehicle-to-vehicle or "V2V"), referring to all kinds of road users, e.g. car-to-car, or between vehicles and fixed locations such as vehicle-to-infrastructure or "V2I", or between vehicles and pedestrians such as vehicle-to-pedestrian or "V2P" and infrastructure-to-vehicle or "I2V", e.g., car-to-infrastructure.

Such message exchanges may be performed via a wireless network, referred to as "V2X" (for "vehicle" to any kind of devices) networks, examples of which may include 3GPP LTE- Advanced Pro, 3GPP 5G, or IEEE 802.11p technology.

Exemplary ITS messages include Collective Perception Messages (CPMs), Cooperative Awareness Messages (CAMs), and Vulnerable Road User (VRU) Awareness Messages (VAMs). The ITS-S sending an ITS message is named "originating" ITS-S and the ITS-S receiving an ITS message is named "receiving" ITS-S.

ETSI TS 103 324 Specification (V0.0.35 of June 2022) defines the Collective Perception Service through which an ITS-S having on-board sensor systems detects objects in its vicinity and transmits, using broadcast CPMs, description information (e.g. dynamics such as position and/or kinematic information) thereof. The CPMs are sent periodically with a period from 100 ms to 1 s depending for example on the speed of the objects sensed by the originating ITS-S.

EN 302 637-2 (V1.4.1 of April 2019) defines the Cooperative Awareness Basic Service through which an ITS-S transmits, using broadcast CAMs, its ego-vehicle dynamics (e.g. position and speed).

ETSI TS 103 300-3 Specification (V2.1.2 of April 2021) defines the Vulnerable Road User (VRU) Awareness Basic Service through which an ITS-S transmits, using broadcast VAMs, its ego-position and speed.

In dense environment such as cities, many VRUs equipped with an ITS-S can send VAMs. To optimize the use of the radio communication channel while keeping the protection of VRUs offered by the VRU Awareness Basic Service (VBS), some VRU Clustering Operations are possible.

Each ITS station has an environment model called Local Dynamic Map (LDM) that is regularly updated with highly dynamic data to locate vehicles, pedestrians, bicycles, etc. in the vicinity of the ITS station. The LDM is updated using information from on-board sensors and completed with information from received ITS message such as:
- awareness messages containing the ego-position and the speed of connected vehicles (CAM) or of connected Vulnerable Road Users (VAM) and
- collective perception messages (CPM) containing the objects perceived (e.g. vehicles, motorbikes, bicycles, or pedestrians) by sensor-equipped ITS stations, referred to as the perceived objects. CPM improve the local perception ability (larger field of view, non-connected objects, etc.).

In a case where an ITS station perceives several VRUs, a CPM can report a set of VRUs either as individual VRUs or as a set of VRUs (e.g. a set of VRUs moving in a coherent manner, i.e. a set of pedestrians or cyclists having coherent direction and speed), the set being referred to as a VRU Group. This is advantageous to reduce the size of the CPM messages when there are many VRUs to report or when individual information about perceived VRUs is difficult to obtain and/or to analyse (e.g., in case of crowd).

Similarly, a VRU ITS station can also report the current state of a set of VRUs containing its ITS-S. In such a case, the reporting is not individual but global given the current state of the set of VRUs such as its reference position, its dimension in the form of a bounding box shape, and its size (number of VRUs). This set is referred to as a VRU Cluster. Like a VRU Group, a VRU Cluster is a set of VRUs moving in a coherent manner, i.e. with coherent direction and speed). One of the VRU ITS-S of the cluster acts as a VRU cluster leader, which is in charge of managing the set of VRUs. Only the VRU cluster leader is transmitting VAMs on the radio communication channel, while the other VRU ITS-Ss of the VRU Cluster (referred to as cluster members) are set in a VRU passive state (i.e., they do not transmit their individual VAMs). This makes it possible to reduce the number of messages on the radio communication channel and to simplify the analysis that is carried out by the ITS-S receiving a single message containing items of information about the cluster rather than a set of messages for each individual VRU.

Reporting items of information about a set of VRUs considered as a single VRU Group through CPMs or about a set of VRUs considered as a single VRU Cluster through VAMs, instead of considering several individual VRUs, makes it possible to reduce significantly the amount of radio communication resource used to transmit the C-ITS messages. In addition, at the receiving ITS-S side, it also reduces the amount of data to analyse, which can be crucial in very dense area location like an urban pedestrian crossing.

While these mechanisms have proven to be efficient, there is a constant need to improve the mechanisms used for exchanging data among ITS stations, in particular to improve communication efficiency in terms of safety and in terms of resource consumption.

### SUMMARY OF THE DISCLOSURE

The present disclosure has been devised to address one or more of the foregoing concerns.

According to a general aspect of the disclosure, the latter is directed to an improved method for managing a VRU Cluster break up when the cluster reporting is managed through CPMs and for reducing the amount of radio communication resources and of analysis resources that are required for managing the VRU Cluster.

According to a particular aspect of the disclosure, there is provided a method of communication in an intelligent transport system, ITS, the method, to be carried out at a vulnerable road user, VRU, ITS station, VRU ITS-S, the VRU belonging to a cluster of VRUs, comprising:
in response to determining that the VRU cluster has been at least partially reported in a collective perception message, CPM, setting an operating mode of the VRU ITS-S to a VRU passive mode comprising refraining the VRU ITS-S from broadcasting VRU awareness messages, VAMs, for a time period.

Accordingly, the method of the disclosure makes it possible to reduce the number of VAMs transmitted over the ITS, in particular the number of VAMs transmitted by VRU ITS-Ss which VRUs belong to a VRU cluster, after breaking up the cluster upon determining that the VRU cluster is reported in a CPM.

According to some embodiments, the setting lasts for a time period expiring after a break up of the cluster.

According to some embodiments, the VRU ITS-S is a cluster leader of the cluster and the setting comprises changing the operating mode of the VRU ITS-S from a VRU active cluster leader mode to the VRU passive mode, the VRU active cluster leader mode allowing broadcasting VAMs.

According to some embodiments, the method further comprises identifying a predetermined event and upon identifying the predetermined event, changing the operating mode of the VRU ITS-S from the VRU passive mode to the VRU active cluster leader mode.

According to some embodiments, the predetermined event comprises determining that the VRU cluster is no longer at least partially reported in the CPM.

According to some embodiments, the cluster comprises a cluster leader and at least one cluster member, the at least one cluster member being in the VRU passive mode, the VRU ITS-S being one of the at least one cluster member, the setting comprising maintaining the operating mode of the VRU ITS-S in the VRU passive mode.

According to some embodiments, the method further comprises receiving a cluster VAM, the cluster VAM comprising a cluster break up indication, the cluster break up indication indicating that the VRU cluster has been at least partially reported in the CPM.

According to some embodiments, determining that the cluster has been at least partially reported in a CPM comprises obtaining a cluster identifier, clusterld, from a data structure of the CPM, and comparing the obtained cluster identifier with an identifier of the cluster.

According to some embodiments, the method further comprises checking whether a VRU associated with the VRU ITS-S is contained within a group of VRUs identified in the CPM, setting the operating mode to the VRU passive mode being carried out as a response of the checking.

According to some embodiments, checking whether the VRU associated with the VRU ITS-S is contained within a group of VRUs identified in the CPM comprises comparing characteristics of the VRU associated with the VRU ITS-S with characteristics of the group of VRUs.

According to some embodiments, characteristics of the VRU associated with the VRU ITS-S and characteristics of the group of VRUs comprise a position and/or a velocity.

According to some embodiments, the method further comprises determining that the VRU cluster is no longer at least partially reported in the CPM and setting the operating mode of the VRU ITS-S to a VRU active standalone mode comprising broadcasting VAMs.

According to other aspects of the disclosure, there is provided a device configured for carrying out each of the steps of the method described above and a non-transitory computer-readable medium storing a program which, when executed by a microprocessor or computer system in an Intelligent Transport System station, ITS-S, causes the ITS-S to perform each step of the method described above.

These aspects of the disclosure have advantages similar to those mentioned above.

At least parts of the methods according to the disclosure may be computer implemented. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present disclosure may take the form of a computer program product embodied in any tangible medium of expression having computer usable program code embodied in the medium.

Since the solutions of the present disclosure can be implemented in software, the solutions of the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g., a microwave or RF signal.

### BRIEF DESCRIPTION OF THE DRAWINGS

Further advantages of the present disclosure will become apparent to those skilled in the art upon examination of the drawings and detailed description. Embodiments of the disclosure will now be described, by way of example only, and with reference to the following drawings, in which:
**Figure 1** illustrates an example of an ITS system in which some embodiments of the present disclosure may be implemented;
**Figure 2** illustrates an example of a schematic representation of the architecture of an ITS station transmitting CPMs in accordance with embodiments of the present disclosure;
**Figure 3** illustrates an example of a schematic representation of the architecture of a VRU ITS station transmitting VAMs in accordance with embodiments of the present disclosure;
**Figure 4** illustrates an example of a structure of a VRU awareness message, VAM;
**Figure 5** illustrates an example of a structure of a collective perception message, CPM;
**Figure 6** illustrates a first example of a VRU ITS-S State Diagram according to some embodiments of the present disclosure;
**Figure 7** illustrates a second example of a VRU ITS-S State Diagram according to some embodiments of the present disclosure;
**Figure 8** illustrates an example of a sequence of messages exchanged between two VRU ITS-Ss and a CPM originating ITS-S, according to some embodiments of the present disclosure; and
**Figure 9** is a schematic representation of an example of a communication ITS-S device configured to implement some embodiments of the present disclosure.

### DETAILED DESCRIPTION OF THE DISCLOSURE

It is noted that the names of the lists and elements (such as data elements) provided in the following description are only illustrative. The embodiments are not limited thereto and other names could be used.

The embodiments of the present disclosure are intended to be implemented in Intelligent Transportation Systems (ITS).

As specified in ETSI TS 103 300-3 Specification (v2.1.2, 2021-04), a VRU cluster leader can break up its cluster upon reception of a CPM containing a description of its cluster. In such a case, after the cluster is broken up, the leader and the members of the VRU Cluster restart transmitting individual VAMs. In a situation where there are many VRU ITS-Ss in the cluster, this results in generating and transmitting a high number of messages at the same time. As a consequence, new clustering operations to create new clusters may be carried out in parallel by several VRU ITS-Ss. This leads to creating an instability in the ITS due to the number of generated messages and in the update of the local dynamic map at each receiving ITS-S.

According to some aspects of the disclosure, the leader and the members of a VRU Cluster are set in a passive state upon detecting that the VRU cluster reported in a VAM is also reported in a CPM and after the cluster is broken up by the VRU cluster leader, meaning that the cluster management has been transferred from the VRU cluster leader to the ITS-S having sent the CPM. Accordingly, the number of C-ITS messages may be significantly reduced, avoiding radio communication congestion, simplifying the analysis of received information to update local dynamic maps, and thus, providing an appropriate level of protection of VRUs in dense area.

### ITS system and ITS stations comprising VRU Cluster Management modules

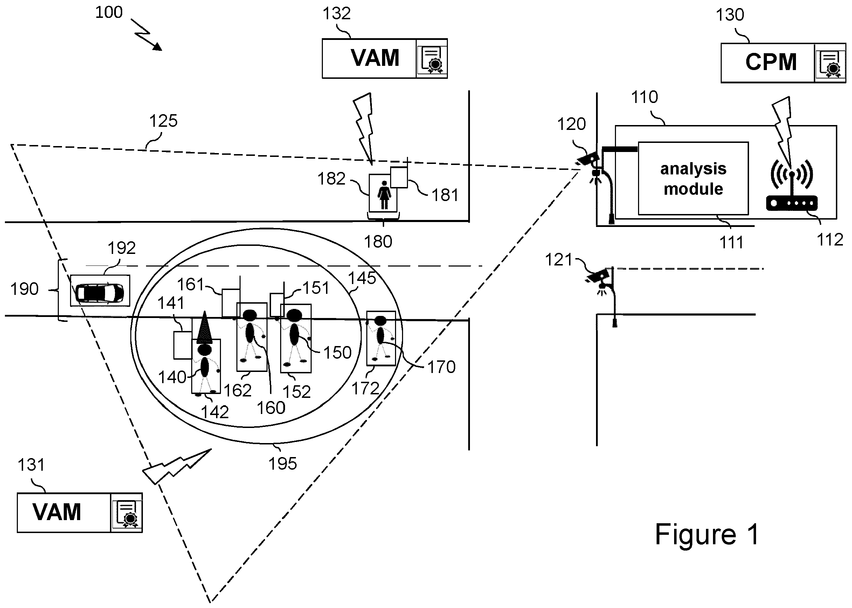

**Figure 1** illustrates an example of an ITS system in which some embodiments of the present disclosure may be implemented.

According to this example, ITS station 110 is a road-side unit, RSU, that may generate and transmit CPMs such as CPM 130. It is observed that RSUs have generally more effective resources than other ITS stations such as VRU ITS-Ss to analyse a global situation. For example, an RSU may have a wider field of view than an ITS-S embedded within a vehicle, multiple fields of view, fast access to other information such as traffic conditions, traffic light status, knowledge of objects that populate the monitored area, etc. However, this disclosure can be implemented in any ITS-S in connection with any ITS-S equipped with sensors. More specifically, an ITS-S equipped with sensors can perceive objects that are not equipped with an ITS-S and thus, it may improve the situation awareness of other ITS-Ss in their vicinity through CPMs.

As illustrated, ITS 100 is implemented at an intersection and comprises fixed road side unit 110 and several entities that may carry or embed an ITS station (ITS-S) each, for transmitting and/or receiving ITS messages within the ITS. The several entities may be for example, pedestrians 140, 150, 160, 170, and 180 and vehicle 190.

Fixed road side unit 110 comprises a set of sensors, such as image sensors, here video cameras 120 and 121, and an analytical module to analyse data provided by the sensors, such as analysis module 111. Each of the video cameras 120 and 121 is configured to monitor or scan a portion of the area monitored by the RSU (here the road intersection), making it possible to reproduce images of the monitored area. For the sake of illustration, video camera 120 monitors area 125. Other sensors such as LlDARs (laser imaging detection and ranging devices) may also be used.

The sensors are connected to the analysis module (e.g. video cameras 120 and 121 are connected to analysis module 111) so that the analysis module may process the data stream captured by the sensors (e.g., the video cameras), or some of the sensors, to analyse the traffic. The analysis module and the sensors may be separate from or embedded within the same physical road side unit. For example, the analysis module may be wire-connected to sensors that may be remote (i.e. not embedded in the road side unit).

The processing of the data received from the sensors by the analysis module, e.g. analysis module 111, aims at detecting objects present in the monitored area, referred to as "perceived objects" or "detected objects" hereinafter. Mechanisms to detect such objects are well known by one skilled in the art.

The analysis module is also configured to output a list of the perceived objects respectively associated with corresponding description information referred to as "state vector". The state vector for a perceived object may include for instance parameters such as a position, a kinematic, temporal information, behavioural or object type classification information, etc. Therefore, the analysis module may identify, among the perceived objects, Vulnerable Road Users (VRUs) such as pedestrians, cyclists, as well as motorcyclists and also persons with disabilities or reduced mobility and may determine their position and movement. It may also identify objects such as trees, road construction/work equipment (e.g. road barriers), and so on.

The VRUs may be considered as ITS-S when carrying an ITS equipment, for example an ITS equipment included in a smartphone, a satnav system, a smart watch, or in a cyclist equipment.

According to the example illustrated in Figure 1, analysis module 111 may perceive the following objects when scanning monitored area 125:
- objects 142, 152, 162, 172, and 182 respectively corresponding to pedestrians 140, 150, 160, 170, and 180, and
- object 192 corresponding to vehicle 190.

In addition, the perceived objects may be classified. According to ETSI TS 102 894-2 Specification defining the Common Data Dictionary for ITS messages, perceived objects reported in a CPM can be of the following types:
- vehicle (with various sub-types such as passenger, truck, bus, etc),
- VRU, with various profiles such as pedestrian, bicyclist, motorcyclist or animal,
- VRU Group or VRU Cluster,
- other class.

Analysis module 111 comprises a VRU Group and Cluster Management module. As analysed above, grouping VRUs makes it possible to reduce the size of a CPM when there are many VRUs to report in the same area. Another reason to report VRUs as a VRU Group instead of individual VRUs results from a difficulty of discriminating each VRU among several VRUs, for example in a crowded area. Criteria for grouping VRUs may be based on the distance from each other and their velocity. For instance, VRU Group 195 includes perceived VRUs 142, 152, 162, and 172.

As illustrated in Figure 1, road side unit 110 further comprises a Roadside ITS-S, R-ITS-S, 112, for example as specified in the reference architecture of an ITS station defined in version V1.1.1 of the ETSI EN 302 665 Specification.

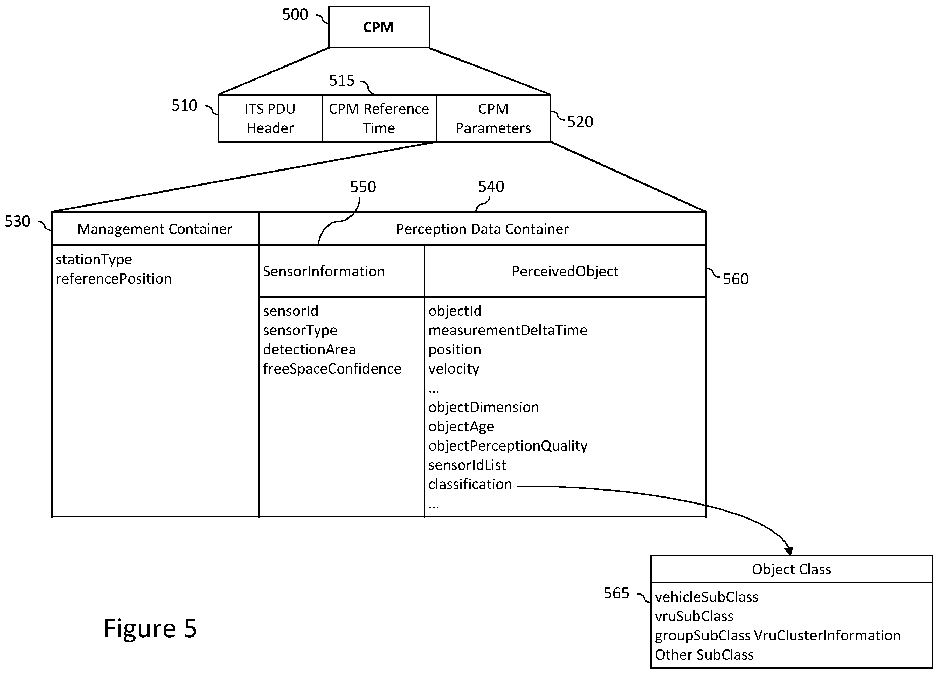

By the means of roadside ITS-S 112, RSU 110 can share information relative to the perceived objects. Typically, RSU 110 can share such information with receiving ITS stations by sending ITS messages, particularly the so-called Collective Perception Messages, CPMs, e.g. CPM 130, defined in ETSI TR 103 562 Specification and in ETSI TS 103 324 Specification, and usually sent periodically. An example of the format of a CPM is illustrated in Figure 5.

More generally, any ITS-S in ITS 100 can share information on the objects it perceives, by sending CPMs, as well as information on itself, by sending so-called Cooperative Awareness Messages, CAMs, defined in ETSI EN 302 637-2 Specification. CAMs may include a position, a kinematic (or dynamics), a unique station identifier, temporal information, behavioural or object type classification information, etc. Similarly, VRU Awareness Messages, VAMs, defined in ETSI TS 103 300-3 Specification, can be sent by VRU ITS-S to share their own position and kinematic or to share information of a set of VRUs (i.e. a VRU cluster).

As illustrated in Figure 1, pedestrians 140, 150, 160, and 180 are equipped with VRU ITS-Ss 141, 151, 161, and 181, respectively, and are able to transmit VAMs and/or to receive CPMs.

The ITS messages are usually broadcast by their originating ITS-S, so that any other ITS-S can exploit them.

All the messages exchanged over ITS 100 help each ITS-S to have a good level of knowledge of its environment in terms of which objects are present and where and how they behave.

In the case of an urban area, many VAMs could be transmitted at the same time. This results in a high level of use of the radio channel and in a large number of ITS messages to be analysed by each ITS station receiving the VAMs. To cope with such a situation, ETSI TS 103 300-3 Specification describes a VRU Clustering Operation where a VRU Cluster Leader (e.g., VRU 141) is transmitting a VAM (e.g., VAM 131) regrouping information about a set of VRUs equipped with ITS stations (e.g., VRUs 152 and 162 equipped with ITS stations 151 and 161, respectively) that have joined this VRU Cluster (e.g. VRU Cluster 145). To limit the number of VAMs, the ITS-Ss (e.g., ITS-Ss 151 and 161) of the members of VRU clusters (e.g., VRU cluster 145) stop transmitting individual VAMs. ITS-Ss associated with VRUs that are not belonging to any VRU cluster continue transmitting individual VAM. For the sake of illustration, ITS-S 181 associated with VRU 182 (that is not belonging to VRU cluster 145 or 195) continues transmitting individual VAM (e.g., VAM 132).

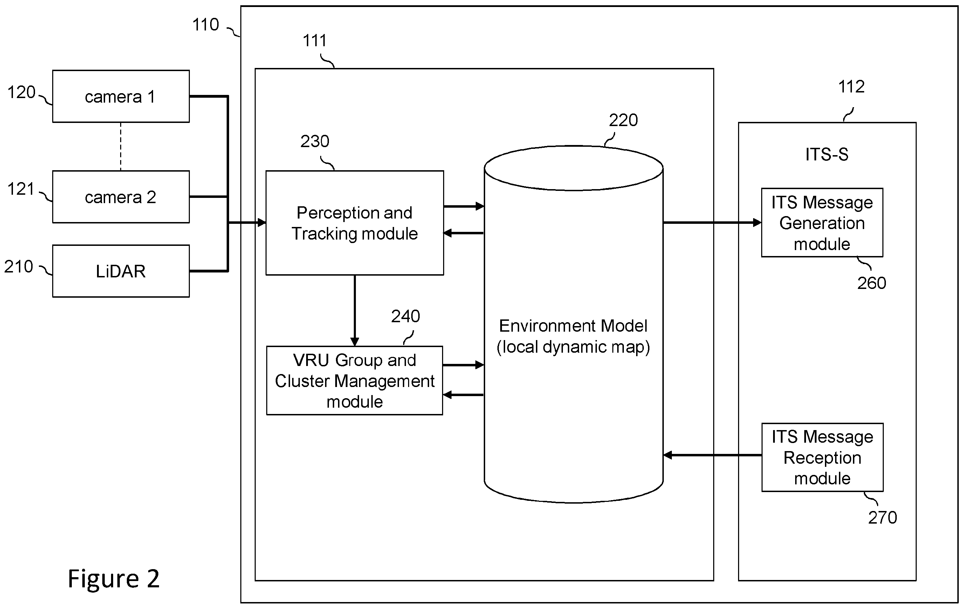

**Figure 2** illustrates a schematic representation of the architecture of an ITS station transmitting CPMs in accordance with embodiments of the present disclosure.

For the sake of illustration, it is considered here that the illustrated ITS station is the RSU referenced 110 in Figure 1. However, it may be another type of ITS-S-equipped entity.

As mentioned above by reference to Figure 1, analysis module 111 is connected to one or more sensors monitoring an area such as a road intersection. These sensors may include cameras 120 and 121 but also other sensors such as LIDAR 210 or mere radar devices (not represented).

The sensor raw data generated by the sensors are processed by the Perception and Tracking module 230. Perception and Tracking module 230 analyses perceived objects detected from each sensor raw data, and using sensor data fusion algorithms combines or merges the same objects detected by several sensors.

Consideration of similarity between objects from different sensors can be based on their object types, positions, kinetics/dynamics (speed, acceleration), trajectories, etc. A level of confidence may also be computed when scrutinizing the similarities of these information items and the merging can be affected when the level of confidence is high enough.

Newly perceived objects or updates about already-tracked objects are used to update Environment Model 220 of the ITS-S. CAMs, VAMs, and CPMs received from other ITS-Ss, conveying additional information, can also be used to update Environment Model 220 by the ITS Message Reception module 270.

The Environment Model is also known as the Local Dynamic Map and contains a list of the perceived objects. Each ITS-S has its own Environment Model 220.

An object in Environment Model 220 is defined together with multiple information items including, for example, all or part of the following:
- *objectID,* that is the identifier of the perceived (or detected) object,
- *timeOfMeasurement,* that represents the time at which the (last) measurement concerning the perceived object was made,
- *objectState,* that is a description of the object kinematic state and attitude. It preferably contains at least the object position and velocity at the time of measurement such as:
   ∘ *objectPosition,* that is the position of the perceived object reference point. The object position may include the following items of information:
      ▪ *worldPosition,* that is the absolute position of the object e.g. using GPS position or UTM coordinates at the time of measurement,
      ▪ *xCoordinate, yCoordinate, zCoordinate,* that represent the distance to the perceived object from the originating ITS-S's reference position to object reference point in the x-direction, y-direction, and z-direction, respectively, at the time of measurement, in a predefined coordinate system, with a corresponding level of confidence. For instance, RSU 112 may use the World Geodetic System 84 (WGS84) as the predefined coordinate system,
   ∘ *objectVelocity (optional),* that represents the velocity vector of the perceived object. It can be in a polar coordinate system or in a Cartesian coordinate system,
   ∘ additional optional information may be added in the Environment Model for completing the description of the object kinematic state and attitude such as the object acceleration angles provided at the time of measurement from the ITS-S's reference position in the predefined coordinate system,
- *objectDimensionX, Y, Z* (optional), that represent the dimensions of the perceived object in the x-direction, y-direction, and z-direction, respectively, at the time of measurement,
- *objectAge,* that is the age of the perceived object,
- *objectPerceptionQuality,* that represents a confidence level associated with the perceived object. The computation of the object confidence may be based on a sensor's or fusion system's specific detection confidence, on the binary detection success (i.e. the detection success of the object during the last measurement), and on the age of the object,
- *sensorIDList* (optional), that is a list of the sensor identifiers which provided the measurement data of the perceived object,
- *classification* (optional), that provides the classification of the perceived object, with a corresponding level of confidence, and
- *mapPosition,* (optional), that indicates the position of the perceived object mapped onto the intersection topology description transmitted in MAP messages.

Environment Model 220 is updated by the Perception and Tracking module 230 and the ITS Message Reception module 270, for example on a regular basis. The ITS Message Generation module 260 generates CPMs containing the perceived object information and estimated object information, for example on a regular basis.

In addition, Environment Model 220 contains a list of individual objects and according to some embodiments of the disclosure, a list of VRU Groups and of VRU Clusters.

The list of VRU Groups and VRU Clusters may be computed by the VRU Group and Cluster Management module 240.

According to some embodiments, VRU Group and Cluster Management module 240 analyses the list of individual VRUs to regroup them in VRU groups based on their characteristics, for example on their position and possibly their velocity. Criteria to create a VRU Group can be similar to the one used to create a VRU Cluster by a VRU ITS-S as specified in ETSI TS 103 300-3 Specification (V.2.1.2).

For the sake of illustration, VRU Group 195 in Figure 1 comprises pedestrians 142, 152, 162, and 172. It is observed that the VRU Group comprises perceived objects that might be equipped or not with an ITS-S. In the illustration, pedestrian 170 is not equipped with an ITS-S.

ITS Message Reception module 270 receives ITS Messages from other ITS-Ss. When a VAM is received and the received VAM comprises items of information directed to a VRU Cluster, the items of information are provided to VRU Group and Cluster Management module 240. Upon reception of such items of information, VRU Group and Cluster Management module 240 determines whether or not this VRU Cluster corresponds to an existing VRU Group. According to some embodiments, the analysis may be based on the VRU Cluster and VRU Group positions, shape, dimension, and velocity. For the sake of illustration, it may be considered that a VRU Cluster corresponds to a VRU Group if all the VRUs belonging to the VRU Cluster also belong to the VRU Group. When a VRU Cluster corresponds to a VRU Group, the identifier of the VRU Cluster (that is provided within VRU Cluster information of a VAM transmitted by a VRU cluster leader) is added to characteristics of the corresponding VRU Group. Therefore, ITS Message Generation module 260, in charge of transmitting CPMs, may generate a CPM containing information about the VRU Group with a reference to the cluster identifier obtained from the received VAM. Upon receiving such a CPM, the VRU cluster leader and the VRU cluster members may become aware that there exists a VRU Group corresponding to their VRU Cluster.

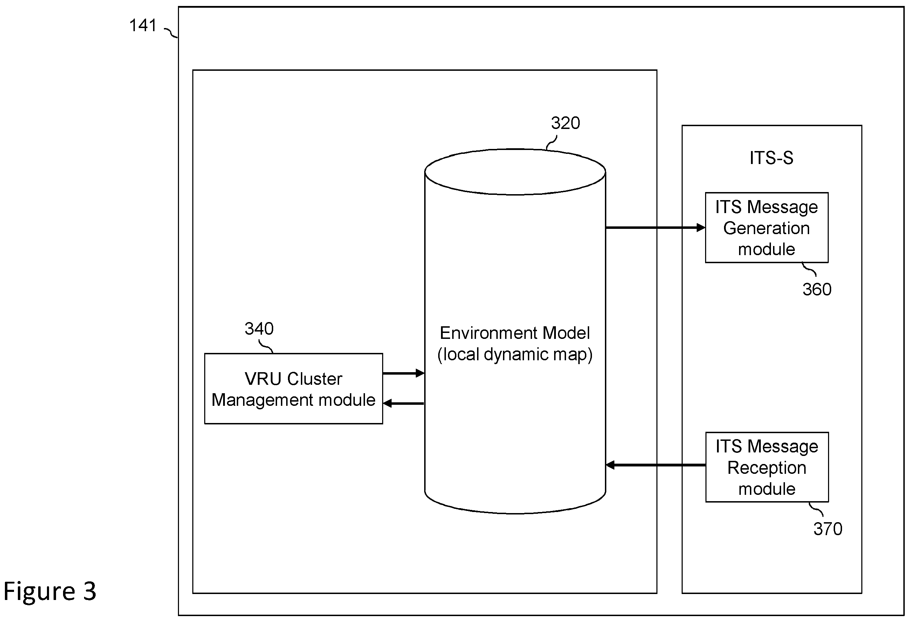

**Figure 3** illustrates a schematic representation of the architecture of a VRU ITS station transmitting VAMs in accordance with embodiments of the present disclosure.

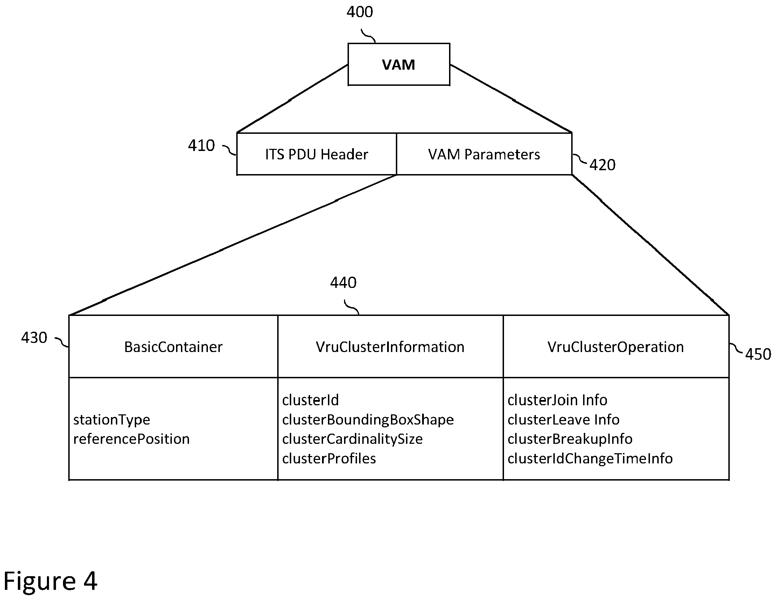

As illustrated, the VRU ITS-S (e.g., VRU ITS-S 141) comprises an ITS Message Generation module 360 to transmit VAMs, for example VAMs having a structure like the one described by reference to Figure 4. According to this example, the VRU ITS-S also comprises an ITS Message Reception module 370 that makes it possible to receive VAMs from other VRU ITS-Ss. In addition, the VRU ITS-S comprises a VRU Cluster Management module 340 that may be used to manage VRU Cluster Operations (such as creating a VRU Cluster, joining a VRU Cluster, leaving a VRU Cluster, or breaking up a VRU Cluster). Conditions to create, join, or leave a VRU Cluster may be the ones defined in ETSI TS 103 300-3 Specification, considering for example the distance between VRUs and their velocities.

In addition, according to some embodiments of this disclosure, ITS Message Reception module 370 is able to receive CPMs from a CPM originating ITS-S and to process such messages. According to some embodiments, ITS Message Reception module 370 may process such CPMs in order to identify indications of VRU Groups and/or VRU Clusters contained in a CPM.

### VAM structure

**Figure 4** illustrates an example of a structure of a VRU awareness message, VAM.

As illustrated, VAM 400 contains an ITS PDU header 410 and a "VAM Parameters" field 420.

ITS PDU header 410 includes a VRU identifier of the originating ITS station (i.e., an identifier of the VRU sending the VAM).

VAM Parameters field 420 contains a Basic Container 430, optionally a Cluster Information Container 440, and also optionally a Cluster Operation Container 450.

Basic Container 430 may comprise the following fields:
- *stationType,* that indicates the type of the ITS station originating the VAM. Examples of possible values are the following ones: 0 for 'unknown', 1 for 'pedestrian', and 2 for 'cyclist',
- *referencePosition,* that represents the reference position of the ITS station originating the VAM within a geographic coordinate system. For the sake of illustration, the reference position can contain the latitude, longitude, and altitude information together with a position confidence ellipse.

According to some embodiments, when the VAM originating ITS station is taking the role of a cluster leader (such as VRU ITS-S 142 in Figure 1), the VAMs it generates contain a VRU Cluster Information Container (e.g., VRU Cluster Information Container 440) that may comprise the following fields:
- *clusterId,* that is a locally unique identifier of the cluster (i.e., the identifier is unique in the radio coverage area of the VRU),
- *clusterBoundingBoxShape,* that defines the shape of the cluster bounding box. Various types of shape are possible such as rectangular, circular, polygonal, etc. Each shape may be defined using a specific value,
- *clusterCardinalitySize,* that is an estimation of the number of VRUs in the cluster,
- *clusterProfiles,* that identifies all the VRU Profiles that are known to be within the cluster. It may consist in a bitmap encoding VRU profiles, to allow multiple profiles to be indicated in a single cluster. An example of VRU Cluster Profiles may be defined as follows: bit 0 is used to encode the presence of one or more pedestrians, bit 1 is used to encode the presence of one or more bicyclists, bit 2 is used to encode the presence of one or more motorcyclists, and bit 3 is used to encode the presence of one or more animals. Accordingly, if the cluster contains at least one pedestrian, bit 0 is set to 1. Likewise, if the cluster contains at least one bicycle, bit 1 is set to 1 and so on.

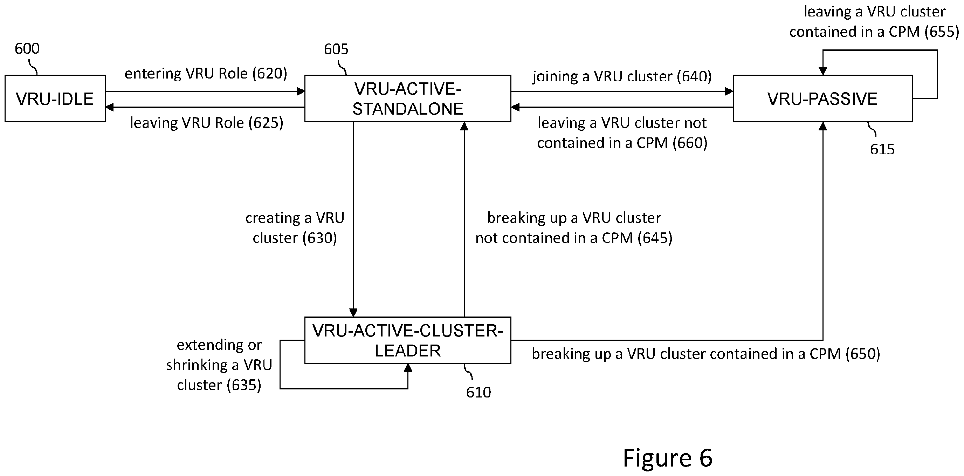

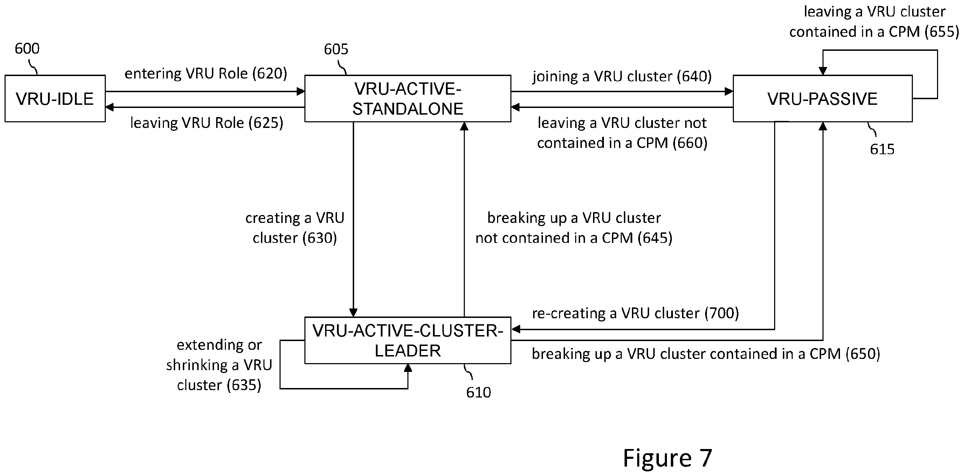

Optionally the VAM originating ITS station can include a Cluster Operation Container (e.g., Cluster Operation Container 450) to make it possible to perform VRU Cluster Operations, as described by reference to Figures 6 and 7. According to some embodiments, four types of Cluster Operations are possible:
- *clusterJoinInfo,* that may be used by a VRU ITS station intending to join an existing cluster. The *clusterJoinInfo* may contain an identifier (*clusterId*) of the cluster the VRU ITS station intends to join and the time after which the VRU ITS station will stop transmitting individual VAMs,
   ∘ a VRU device may determine that it is within a cluster bounding box indicated by a message other than a VAM (for example a CPM). In that case, it shall provide the special value "0" as identifier of the cluster it joins, if there is no cluster identifier in the message other than a VAM. Otherwise it shall indicate the cluster identifier indicated in the message other than a VAM (for example a CPM),
   - *clusterLeaveInfo,* that may be used by a VRU ITS station belonging to a cluster to inform it has recently left the cluster. The *clusterLeaveInfo* may contain an identifier (*clusterId*) of the cluster the VRU ITS station has left and the reason of leaving the cluster,
      ∘ a VRU device that is within a cluster indicated by a message other than a VAM (for example a CPM) shall indicate the special cluster identifier value "0", if there is no cluster identifier in the message other than a VAM. Otherwise it shall indicate the cluster identifier indicated in the message other than a VAM (for example a CPM),
   - *cluster8reakupInfo,* that may be used by a VRU ITS station leading a cluster to inform of its intention to break up its cluster. The *clusterBreakupInfo* may contain a reason of breaking up the cluster and a time after which the VRU ITS station will stop transmitting cluster VAMs, and
   - *clusterIdChangeTimeInfo,* that may be used by a VRU ITS station leading a cluster to inform the cluster members that it will change its cluster identifier (*clusterId*) at a specified time. Such a change of cluster identifier may be used for privacy reasons.

It is be noted that the organization of the fields illustrated in Figure 4 are provided for the sake of illustration. It is not limitative and the fields may be organized differently.

### CPM structure

**Figure 5** illustrates an example of a structure of a collective perception message, CPM.

The illustrated CPM structure, referenced 500, is based on ETSI TS 103 324 Specification (V0.0.35 of June 2022). It comprises an ITS PDU header 510, a CPM reference time field 515, and a "CPM Parameters" field 520.

ITS PDU header 510 is a common header that includes the information of the protocol version, the message type, and the ITS-S identifier (ID) of the originating ITS-S.

CPM reference time (*cpmReferenceTime*) field 515 is the absolute reference time of the message.

As illustrated, "CPM Parameters" field 520 comprises a management container referenced 530 and a perception data container referenced 540 that in turn contains an optional set of sensor information containers referenced 550 and an optional set of perceived object containers referenced 560. It is observed that "CPM Parameters" field 520 comprises other containers that are not shown since they are not relevant for this disclosure (e.g., free space addendum container or perceived region container).

Each container includes some data elements (DE) and/or data frames (DF). ETSI TS 102 894-2 V2.1.1 Specification defines conventional data elements and data frames used in ITS messages.

Regardless of the type of the ITS-S generating the considered CPM, the management container provides information regarding the station type and the reference position of the originating ITS station. The message can be transmitted either by an ITS station, such as a vehicle, or by a stationary RSU.

Sensor information container 550 (that is optional) contains information regarding the set of sensors of the ITS station. It provides information about the sensory capabilities of an ITS station. Depending on the station type of the originating ITS station, different sensor information specifications are available to encode the properties of a sensor. The sensor information container is attached to CPMs at a lower frequency than the other containers, as defined in ETSI TS 103 324 Specification. A sensor information container may include:
- *sensorId,* that is an identifier of the sensor,
- *sensorType,* that represents the type of the sensor. Various types of sensors can be defined such as radar, lidar, monovideo, stereovision, nightvision, ultrasonic, pmd, fusion, inductionloop, sphericalCamera, itssaggregation and uwb,
- *detectionArea,* that represents the area of the detection (e.g. a field of view of the camera sensor), and
- *freeSpaceConfidence,* that represents a confidence level of the information indicating that an area is not occupied.

Perceived object container 560 (that is optional) contains a set of objects perceived by the sensors of the CPM originating ITS station. It comprises a sequence of optional or mandatory data elements (DEs) and/or data frames (DFs) which give a detailed description of the dynamic state and properties of a perceived (or detected) object.

More precisely, each object may be described using the dedicated *perceivedObject* structure referenced 560 as defined by the ETSI TS 102 894-2 Specification (V2.1.1) and may comprise various fields including the following ones:
- *objectId,* that is an identifier assigned to a perceived object by the originating ITS-S. It remains constant as long as the object is perceived by the originating ITS-S,
- *measurementDeltaTime,* that corresponds to the time difference between the time of measurement of the items of information provided in the CPM, that are directed to the perceived object, and the reference time provided in CPM reference time 515,
- *position,* that represents the position defined by *xCoordinate, yCoordinate,* and *zCoordinate,* corresponding to the distance between the perceived object and the originating CPM ITS-S's reference point the in *x-direction, y-direction,* and *z-direction* of the ITS-S coordinate system, respectively, at the time of measurement,
- *velocity,* that represents the velocity defined by *xVelocity, yVelocity,* and *zVelocity,* corresponding to the speed of the perceived object in the originating CPM ITS-S's reference system in the *x-direction, y-direction,* and *z-direction,* respectively, at the time of measurement,
- *objectDimensionX,Y,Z* (optional), that represents the dimension of the perceived object in the *x-direction, y-direction,* and *z-direction,* respectively,
- *objectAge,* that is the age of the perceived object,
- *objectPerceptionQuality,* that is the confidence level associated with the perceived object. The computation of the object confidence level may be based on a sensor's or merging system confidence, on the binary detection success (i.e. the detection success of the object during the last measurements), and on the age of the perceived object,
- *sensorIDList* (optional), that is a list of sensor identifiers which provided the measurement data used to perceive the object. It refers to *sensorId* in sensor information container 550. If the sensor information container is never provided by the originating ITS-S, the list may be populated with random numbers, where each number is assigned to a sensor of the originating ITS-S,
- *classification,* that provides the classification of the perceived object. It comprises a class of objects (e.g., Object Class 565) and possibly a subclass (e.g., a vehicle class may have passengerCar, bus, etc. as subclass) with a class confidence value.

According to some embodiments of the disclosure, an ITS-S transmitting CPMs may regroup items of information of VRUs into a VRU Group, using the VRU Group and Cluster Management module 240 (as described with reference to Figure 2). To report a VRU Group in a CPM, the classification structure associated with the object (i.e., with the VRU Group) may use the data structure *groupSubClass* of type *VruClusterInformation.* The *VruClusterInformation* data structure may be similar to the one of the VAM Cluster Information Container 440 described in reference to Figure 4.

In the case of a CPM transmitting information regarding a group of VRUs, the *clusterId* is optional. It may be used to inform other ITSs that a VRU Group (determined by the CPM originating ITS station) is associated with a VRU Cluster defined in a VAM transmitted by a VRU ITS station leading a cluster. Other items of information may be used within a CPM to report such an association, either explicitly or implicitly, or more generally to inform other ITSs that the VRU Cluster is comprised partially comprised within the VRU Group. This makes it possible to report at least partially a VRU Cluster in a CPM.

It is to be noted that the *perceivedObject* structure in a CPM may comprise other fields, in particular other optional fields such as acceleration, angles, etc., that are not described here since they are not meaningful in the context of the disclosure. It is also to be noted that the organization of the fields illustrated in Figure 5 is not limitative (the fields may be organized in a different way in some embodiments).

### Cluster break up management

**Figure 6** illustrates a first example of a VRU ITS-S State Diagram based on ETSI TS 103 300-3 Specification, according to some embodiments of the disclosure.

As illustrated, a VRU ITS-S may be in one of four different states for its VRU Basic awareness Service (VBS) Clustering States denoted VRU-IDLE (600), VRU-ACTIVE-STANDALONE (605), VRU-ACTIVE-CLUSTER-LEADER (610), and VRU-PASSIVE (615).

According to the VRU-IDLE state, the user of the VRU ITS-S is in an operating mode in which it is not considered as being a VRU (i.e., the role of the ITS-S is not set to VRU, e.g., it is set to VRU_ROLE_OFF). In this state, no VAM is generated and transmitted by the VRU ITS station. In the VRU-ACTIVE-STANDALONE state, VAMs are transmitted periodically with information relating to the VRU only (the generated VAM are individual VAMs specific to the VRU). In such a state, the VRU ITS-S may indicate an intention to join a cluster or may indicate that it has just left a cluster, for example using the Cluster Operation Container 450 described in reference to Figure 4. The VRU-ACTIVE-CLUSTER-LEADER state corresponds to the state of the VRU ITS-S when the latter is a VRU cluster leader that generates and transmits cluster VAMs, that is to say VAMs comprising information relating to a set of VRUs moving in a coherent manner. In the VRU-PASSIVE state, the VRU ITS-S stops sending VAMs, either individual VAMs or cluster VAMs.

When the ITS station is in VRU-IDLE state 600, it may enter VRU-ACTIVE-STANDALONE state 605 (step 620) when its user is to be considered as a VRU ("entering VRU Role", when the VRU Role is set to VRU_ROLE_ON). This may be the case, for example, of a pedestrian, having an ITS station, exiting from a bus.

When the ITS station is in VRU-ACTIVE-STANDALONE state 605, its operating mode makes it possible to transmit VAMs periodically. When being in this operating mode, its user may stop being considered as a VRU ("leaving VRU Role", the role of the user of the ITS-S changes to VRU_ROLE_OFF), for example if the user of the ITS-S enters a bus. In such a case, the ITS-S returns to the VRU-IDLE state (step 625).

Alternatively, from VRU-ACTIVE-STANDALONE state 605, the ITS-S may determine, based on VAMs received from other VRUs, that it would be beneficial to create a cluster (step 630), for example using VRU Cluster Management module 340 in Figure 3. To that end, the ITS-S may obtain a cluster identifier (*clusterId*), for example it generates a random cluster identifier, that is locally unique (i.e., it is unique in the radio coverage area of the VRU). Next, the ITS-S may determine a cluster initial shape (Cluster Bounding Box Shape), a cluster initial size (Cluster Cardinality Size), and a cluster VRU profiles (Cluster Profiles), that are determined as a function of the VRU cluster leader only. After creating the cluster, the ITS-S moves to VRU-ACTIVE-CLUSTER-LEADER state 610. After entering in the corresponding operating mode, a cluster VAM is transmitted with cluster information enabling other ITS-Ss to get knowledge about the VRU cluster so that they can join it if the conditions are fulfilled.

As described in reference to Figure 4, the created cluster may be signalled by VRU Cluster Management module 340 using the Cluster Information Container 440.

While being in VRU-ACTIVE-CLUSTER-LEADER state 610, the cluster leader may update the description of the cluster (step 635) regarding the VRUs that joined the cluster and the VRU that left the cluster, based on join and/or leave VAMs received from other VRUs, and regarding the reference position of the cluster, its velocity, etc. Information about VRUs joining and/or leaving the cluster may be obtained by VRU Cluster Management module 340, for example using the Cluster Operation Container 450 with the parameter *clusterJoinInfo* and/or *clusterLeaveInfo.*

According to some embodiments and as described in reference to Figure 4, cluster VAMs may contain a VRU Cluster Information Container (e.g. VRU Cluster Information Container 440 in Figure 4) with specific data elements relating to the cluster. It is also possible for the cluster leader to change the *clusterId,* for example for privacy reasons as described above. In such a case, the modifications brought to the cluster may be signalled by VRU Cluster Management module 340 to inform the VRU cluster members of the change, for example using the Cluster Operation Container 450 with the parameter *clusterIdChangeTimeInfo.*

When the ITS station is in VRU-ACTIVE-STANDALONE state 605, transmitting VAMs periodically, it may decide to join a cluster upon receiving a cluster VAM from a cluster leader. This determination may be carried out by its VRU Cluster Management module (e.g., VRU Cluster Management module 340 in Figure 3) based on characteristics of the cluster and of the VRU (e.g., based on position and speed). In such a case, the VRU ITS-S may send an individual VAM with a VRU Cluster Operation Container (e.g., VRU Cluster Operation Container 450 in Figure 4) with *ClusterJoinInfo* comprising the identifier of the cluster to join (*ClusterId*) and the time to join. When the VRU ITS-S determines that it has successfully joined the cluster (e.g., by analysing a cluster VAM received from the cluster leader and determining that the cluster VAM designates the VRU ITS-S as a VRU member), its state moves to VRU-PASSIVE state 615 (step 640). As described above, when entering in the corresponding operating mode, the VRU ITS-S stops transmitting individual VAMs when it joins the cluster (only the cluster leader sends cluster VAMs representing all the cluster members). The VRU ITS-S may stay in VRU-PASSIVE state 615 (stopping transmitting individual VAMs) for a predetermined period of time, until detecting a particular event (e.g., determining that the VRU cluster identifier is no longer reported in a CPM), until leaving the VRU cluster, etc. According to some embodiments of the disclosure and after a VRU cluster is broken up further to determining that the VRU cluster identifier is reported in a CPM, the VRU ITS-S stays in VRU-PASSIVE state 615 for a time period, for example a time period expiring after breaking up the cluster.

As explained with reference to Figure 5, a CPM may report a group of VRUs using the *groupSubClass* classification. When a CPM originating ITS-S determines that one of its VRU Group may be associated with a VRU Cluster described in a received cluster VAM, for example in a case where all the members of the VRU Cluster belong to the VRU group, the cluster identifier obtained from the cluster VAM may be reported in the *ClusterId* field of the CPM VRU Group.

According to ETSI TS 103 300-3 Specification, a VRU cluster leader may break up its cluster after determining that this cluster is referenced within a CPM and preferably after determining that the cluster leader is located within the VRU Group (e.g., using its bounding box, that may be defined with a perceived object position and size or with a specific data structure). To that end, the VRU cluster leader sends a VAM with a Cluster Operation Container with a Cluster Break up Info indicating the *clusterBreakupReason* to be "receptionOfCpmContainingCluster". As a consequence, VRU cluster members may resume sending individual VAMs. In such a case, the VRU cluster leader moves to VRU-ACTIVE-STANDALONE state 605 after breaking up the cluster (step 645).

However, the inventors have observed that in certain circumstances, for example in the case of dense areas where many VRUs are members of the same cluster, many individual VAMs are generated at the same time after break up of the cluster, leading to new clustering operations to create new clusters in parallel in many VRU ITS-Ss. This causes an instability until a new cluster is created. Generating many individual VAMs overloads the radio communication channel and consumes additional resources in the ITS-Ss receiving these individual VAMs. As a consequence, it creates a risk for the VRUs.

To cope with such drawbacks, the behaviour of the VRU cluster leader and of the VRU cluster members is modified when the VRU cluster leader breaks up the cluster upon determining that the VRU Cluster is identified in a CPM.

Therefore, when being in VRU-ACTIVE-CLUSTER-LEADER state 610 and when deciding to break up the cluster upon determining that the cluster is identified in a CPM received from another ITS-S (and preferably upon determining that the cluster leader is inside the bounding box of the VRU Group described in the CPM), a VAM indicating the break up with the reason of the break up is generated and transmitted and the ITS-S moves to VRU-PASSIVE state 615 (step 650). Again, the VRU ITS-S may stay in VRU-PASSIVE state 615 (stopping transmitting individual VAMs) for a predetermined period of time, until detecting a particular event (e.g., determining that the VRU cluster identifier is no longer reported in a CPM), etc. According to some embodiments of the disclosure and after a VRU cluster is broken up further to determining that the VRU cluster identifier is reported in a CPM, the VRU ITS-S stays in VRU-PASSIVE state 615 for a time period, for example a time period expiring after breaking up the cluster. Still according to some embodiments, the ITS-S VRU Cluster Management module (e.g., VRU Cluster Management module 340) is used to determine that the cluster is identified within a received CPM and thus, may be break up. Next, it generates and transmits a cluster VAM including VRU Cluster Operation Information (e.g., VRU Cluster Operation Information 450) containing a reason for the break up, for example the *clusterbreakupInfo* reason set to *"receptionOfCpmContainingCluster".* The *clusterBreakupInfo* indicates the cluster break up reason and the break up time.

Once the VRU cluster leader has moved to VRU-PASSIVE state 615, all the ITS-Ss belonging to the cluster are in that state and are instructed to leave the cluster. However, according to some embodiments, a further condition is to be checked for leaving a cluster, which is that the cluster is not identified any more in a CPM.

It is recalled that according to ETSI TS 103 300-3 Specification, a VRU Cluster Management module can decide to leave a cluster at any time, for example because the cluster leader is lost, the cluster member is above a certain distance threshold from its cluster, or for safety reason the VRU should resume sending individual VAMs. When the VRU ITS-S is leaving the cluster, it sends an individual VAM with the Cluster Operation Container containing the Cluster Leave Info indicating the cluster identifier and the reason of leaving (e.g. cluster leader lost, outside of the cluster bounding box, etc.). After leaving the cluster, the ITS-S moves to the VRU-ACTIVE-STANDALONE state.

According to embodiments of the disclosure, an ITS-S receiving a cluster break up, for example in a cluster VAM (for cluster members) or from the Cluster Management module (for the cluster leader), determines whether the cluster to be broken up is identified in a CPM previously received from a CPM originating ITS-S. If the cluster to be broken up is identified in a CPM previously received, the ITS-S stays in VRU-PASSIVE state 615 (step 655) until a CPM received from the same CPM originating ITS-S does not identify the cluster any more (step 660). In such a case, the VRU ITS-S moves to VRU-ACTIVE-STANDALONE state 605.

In other words, when a VRU cluster leader that is in the VRU-ACTIVE-CLUSTER-LEADER state detects that its cluster is already reported in a CPM, it may break up the cluster by indicating the *"receptionOfCpmContainingCluster"* reason. According to some embodiments of the disclosure, the VRU cluster leader may directly move to the VRU-PASSIVE state instead of returning to the VRU-ACTIVE-STANDALONE state.

Similarly, a VRU cluster member receiving a cluster break up with the reason "*receptionOfCpmContainingCluster*" reason may stay in the VRU-PASSIVE state instead of returning to the VRU-ACTIVE-STANDALONE state if its cluster is already reported in a CPM.

Accordingly, when a VRU cluster leader determines that its cluster is already reported in a CPM, the number of generated ITS messages is optimized (only the CPM is transmitted with the Cluster information) by not sending many individual VAMs by the VRU cluster leader and the VRU cluster members at the time of the VAM cluster disbanding. Transferring the reporting of VRU cluster from VAM to CPM is particularly efficient when the CPM is generated by a fixed infrastructure that can have a wider field of view and complementary sensing means to perceived objects.

In a case where the VRU cluster leader should break up the cluster and the cluster is not reported within a CPM, the VRU cluster leader moves to VRU-ACTIVE-STANDALONE state 605 after breaking up the cluster (step 645) according to ETSI TS 103 300-3 Specification.

**Figure 7** illustrates a second example of a VRU ITS-S State Diagram based on ETSI TS 103 300-3 Specification, according to another embodiment of the disclosure.

Figure 7 is similar to Figure 6, but it comprises a new transition from the VRU-PASSIVE state to VRU-ACTIVE-LEADER-CLUSTER state (step 700). Such a transition may be relevant in different cases, in particular in a case where the VRU cluster leader has moved to VRU-PASSIVE mode (upon breaking up the corresponding VRU cluster in step 650 or without breaking-it up), if the VRU cluster leader determines that the VRU cluster is no longer reported within a CPM (e.g., the CPM ITS-S has stopped generating messages, the CPM ITS-S is no longer located in the radio coverage of the VRU cluster leader ITS-S, etc.). According to step 700, the VRU cluster leader takes over the VRU cluster transmission in its VAMs by returning to VRU-ACTIVE-LEADER-CLUSTER state 610.

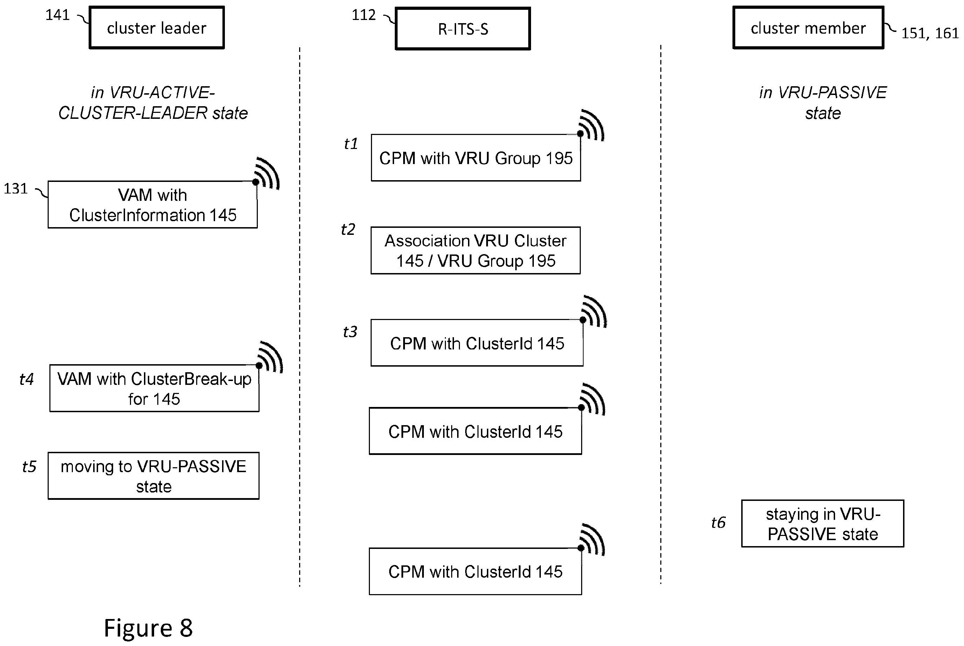

**Figure 8** illustrates an example of a sequence of messages exchanged between two VRU ITS-Ss and a CPM originating ITS-S, according to some embodiments of the present disclosure. For the sake of illustration, this sequence of messages is carried out within the ITS system 100 illustrated in Figure 1, between VRU ITS-S 141 that is considered as being the cluster leader of VRU Cluster 145, Roadside ITS-S 112 that manages VRU Group 195, and VRU ITS-S 151 or 161 that is a VRU member of VRU Cluster 145. Since Roadside ITS-S 112 is configured to generate and transmits CPMs, it is also referred to as CPM ITS-S 112.

For the sake of illustration, it is assumed that VRU ITS-S 141 is generating cluster VAMs such as VAM 131 for the VRU cluster 145, providing information about all the VRUs of VRU Cluster 145. VRU ITS-S 151 and 161 are cluster members of VRU Cluster 145 accordingly, they are set in the VRU-PASSIVE state, meaning they are not sending any individual VAM.

At time *t1,* CPM ITS-S 112 generates CPM 130 identifying VRU Group 195, regrouping pedestrians 142, 152, 162, and 172, perceived by analysis module 111.

At time t2, CPM ITS-S 112 receives cluster VAM 131 containing information regarding VRU Cluster 145. Using information received in cluster VAM 131, the VRU Group and Cluster Management module of CPM ITS-S 112 (e.g., VRU Group and Cluster Management module 240) determines that VRU Cluster 145 can be associated with VRU group 195 (all the VRU members of VRU Cluster 145 are members of VRU Group 195). At time t3, CPM ITS-S 112 generates and transmits a CPM referencing VRU Cluster 145, for example by comprising the cluster identifier (Clusterld) of VRU Cluster 145 in the data structure describing VRU Group 195.

For the sake of illustration, a portion of a CPM generated by CPM ITS-S 112 at time t1 and t3 may be as follow:

| | | | |
|---|---|---|---|
| CPM at time *t1* | | CPM at time *t3* | |
| Object Id: 195 | | Object Id: 195 | |
| Classification: groupSubClass | | Classification: groupSubClass | |
| | Cluster Id: not set | | Cluster Id: 145 |

Upon receipt of a CPM referencing its own cluster (e.g., by checking the cluster identifier value), VRU ITS-S 141 (being the cluster leader of VRU Cluster 145) may decide to break up its cluster, preferably after checking that it is included in the CPM Group (e.g., by comparing its position to the group bounding box).

At time *t4*, according to a particular embodiment of the disclosure, VRU ITS-S 141 (i.e., the VRU cluster leader) sends a cluster VAM to break up the cluster, with the cluster break up set to reason "*receptionOfCpmContainingCluster*". At time *t5*, after having sent this cluster VAM, VRU ITS-S 141 moves to the VRU-PASSIVE state (without returning to the VRU-ACTIVE-STANDALONE state).

At time *t6*, upon receiving the cluster break up VAM with a reason set to "*receptionOfCpmContainingCluster*"*,* the other VRU members of VRU Cluster 145, for example, VRU ITS-S 151 and 161, stay in the VRU-PASSIVE state. Preferably, they stay in the VRU-PASSIVE state if they determine that they have received a CPM containing the cluster identifier of the VRU Cluster to which they belong and/or after checking that they are contained in the group bounding box. If the cluster members are not able to receive the CPM comprising the cluster identifier of the VRU Cluster to which they belong (e.g., they are out of the radio coverage area of the CPM ITS-S 112), they may follow the normal process to return to the VRU-ACTIVE-STANDALONE state to restart sending individual VAMs, as disclosed in ETSI TS 103 300-3 Specification.

According to these embodiments, the number of VAMs is reduced to having only the cluster leader to send break up messages when the reporting of a VRU Cluster is transferred from the VAM cluster leader to a CPM ITS-S.

According to other embodiments of this disclosure, the VRU cluster leader does not send any cluster break up VAM upon receiving a CPM reporting its cluster but moves directly to the VRU-PASSIVE state (i.e., the step at time *t4* is not carried out). The other VRU cluster members (e.g., VRU cluster members 151 and 161) detect a VRU cluster lost situation. If they have received a CPM reporting the cluster they belong to, they can stay in VRU-PASSIVE state at time *t6* as in the previous embodiments.

Accordingly, the number of VAMs is reduced and only the CPM is generated to report the VRU cluster.

In some embodiments, if the VBS in VRU-ACTIVE-CLUSTER-LEADER state has determined that it should break up the cluster because its cluster is referenced within a Collective Perception Message (CPM) (break-up reason set to receptionOfCPMcontainingCluster), all VRU cluster member devices may stay in the state VRU-PASSIVE and the VRU cluster leader device may directly transition into the state VRU-PASSIVE.

In other embodiments, a VRU device may determine that it is within a cluster bounding box indicated by a message other than a VAM (for example a CPM). In that case, it shall follow the cluster join process (known by those skilled in the art), but shall provide the special value "0" as identifier of the cluster it joins, if there is no cluster identifier in the message other than a VAM. Otherwise it shall indicate the cluster identifier indicated in the message other than a VAM (for example a CPM).

Further, a VRU device that is in VRU-PASSIVE state and within a cluster indicated by a message other than a VAM (for example a CPM) may decide to resume sending VAMs because it has determined it was within the cluster indicated by the other message, but is now going to leave or has left that cluster bounding box. In that case, it shall follow the cluster leave process described here, indicating the special cluster identifier value "0", if there is no cluster identifier in the message other than a VAM. Otherwise it shall indicate the cluster identifier indicated in the message other than a VAM (for example a CPM).

Advantageously, a VRU cluster member receiving a cluster break up with the reason "receptionOfCpmContainingCluster" reason may stay in the VRU-PASSIVE state instead of returning to the VRU-ACTIVE-STANDALONE state if its cluster is already reported in a CPM.

Optionally, a VRU device joining or leaving a cluster announced in a message other than a VAM shall indicate this using the Clusterld value "0", if there is no cluster identifier in the message other than a VAM. Otherwise it shall indicate the cluster identifier indicated in the message other than a VAM (for example a CPM). Accordingly, the present disclosure allows the following features:
- adding the possibility for a VRU to Join/Leave a CPM VRU Cluster by indicating the cluster identifier clusterld value that is now possibly provided in the CPM. Current version of TS 103 300-3 specifies to use the special value "0" and
- modification of the VBS clustering states to reduce the number of VAMs transmitted by VRU ITS-Ss which VRUs belong to a VRU cluster, after breaking up the cluster upon determining that the VRU cluster is reported in a CPM.

### Example of a hardware to carry out steps of the method of embodiments of the present disclosure

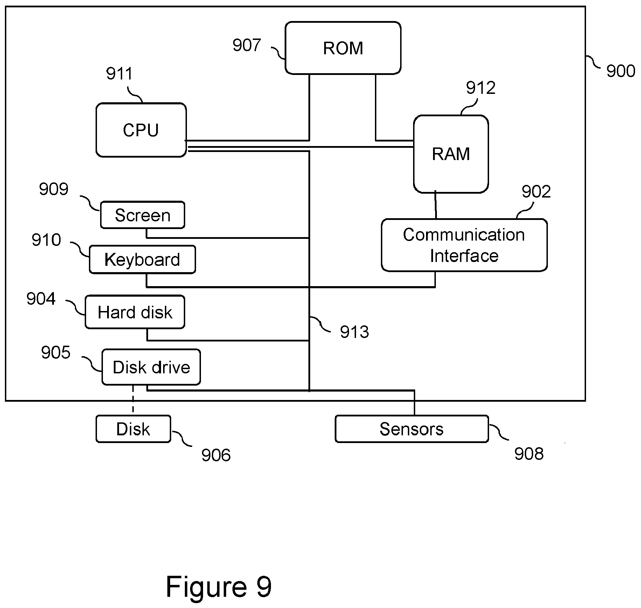

**Figure 9** is a schematic representation of an example of a communication ITS-S device configured to implement some embodiments of the present disclosure. It may be either an ITS-S embedded in a vehicle or in a road side unit, for example road side unit 110 in Figure 1.

The communication device 900 may preferably be a device such as a microcomputer, a workstation or a light portable device embedded in a vehicle or a RSU. The communication device 900 comprises a communication bus 913 to which there are preferably connected:
- a central processing unit 911, such as a microprocessor, denoted CPU or a GPU (for graphical processing unit);
- a read only memory 907, denoted ROM, for storing computer programs for implementing the invention;
- a random access memory 912, denoted RAM, for storing the executable code of methods according to embodiments of the invention as well as the registers adapted to record variables and parameters necessary for implementing methods according to embodiments of the invention; and
- at least one communication interface 902 connected to the radio communication network over which ITS messages are transmitted. The ITS messages are written from a FIFO sending memory in RAM 912 to the network interface for transmission or are read from the network interface for reception and writing into a FIFO receiving memory in RAM 912 under the control of a software application running in the CPU 911.

Optionally, the communication device 900 may also include the following components:
- a data storage means 904 such as a hard disk, for storing computer programs for implementing methods according to one or more embodiments of the invention;
- a disk drive 905 for a disk 906, the disk drive being adapted to read data from the disk 906 or to write data onto said disk;
- a screen 909 for serving as a graphical interface with the user, by means of a keyboard 910 or any other pointing means.

The communication device 900 may be optionally connected to various peripherals including perception sensors 908, such as for example a digital camera, each being connected to an input/output card (not shown) so as to supply data to the communication device 900.

Preferably the communication bus provides communication and interoperability between the various elements included in the communication device 900 or connected to it. The representation of the bus is not limiting and in particular the central processing unit is operable to communicate instructions to any element of the communication device 900 directly or by means of another element of the communication device 900.

The disk 906 may optionally be replaced by any information medium such as for example a compact disk (CD-ROM), rewritable or not, a ZIP disk, a USB key or a memory card and, in general terms, by an information storage means that can be read by a microcomputer or by a microprocessor, integrated or not into the apparatus, possibly removable and adapted to store one or more programs whose execution enables a method according to the invention to be implemented.

The executable code may optionally be stored either in read-only memory 907, on the hard disk 904 or on a removable digital medium such as for example a disk 906 as described previously. According to an optional variant, the executable code of the programs can be received by means of the communication network, via the interface 902, in order to be stored in one of the storage means of the communication device 900, such as the hard disk 904, before being executed.

The central processing unit 911 is preferably adapted to control and direct the execution of the instructions or portions of software code of the program or programs according to the invention, which instructions are stored in one of the aforementioned storage means. On powering up, the program or programs that are stored in a nonvolatile memory, for example on the hard disk 904 or in the read only memory 907, are transferred into the random access memory 912, which then contains the executable code of the program or programs, as well as registers for storing the variables and parameters necessary for implementing the invention.

In a preferred embodiment, the apparatus is a programmable apparatus which uses software to implement the invention. However, alternatively, the present invention may be implemented in hardware (for example, in the form of an Application Specific Integrated Circuit or ASIC).

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments may be interchanged, where appropriate.

Each of the embodiments of the invention described above can be implemented solely or as a combination of a plurality of the embodiments. Also, features from different embodiments can be combined where necessary or where the combination of elements or features from individual embodiments in a single embodiment is beneficial.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method of communication in an intelligent transport system, ITS, the method, to be carried out at a vulnerable road user, VRU, ITS station, VRU ITS-S, the VRU belonging to a cluster of VRUs, comprising:
in response to determining that the VRU cluster has been at least partially reported in a collective perception message, CPM, setting an operating mode of the VRU ITS-S to a VRU passive mode comprising refraining the VRU ITS-S from broadcasting VRU awareness messages, VAMs, for a time period.

2. The method of claim 1, wherein the setting lasts for a time period expiring after a break up of the cluster.

3. The method of claim 1 or claim 2, wherein the VRU ITS-S is a cluster leader of the cluster and wherein the setting comprises changing the operating mode of the VRU ITS-S from a VRU active cluster leader mode to the VRU passive mode, the VRU active cluster leader mode allowing broadcasting VAMs.

4. The method of claim 3, further comprising identifying a predetermined event and upon identifying the predetermined event, changing the operating mode of the VRU ITS-S from the VRU passive mode to the VRU active cluster leader mode.

5. The method of claim 4, wherein the predetermined event comprises determining that the VRU cluster is no longer at least partially reported in the CPM.

6. The method of claim 1, wherein the cluster comprises a cluster leader and at least one cluster member, the at least one cluster member being in the VRU passive mode, the VRU ITS-S being one of the at least one cluster member, the setting comprising maintaining the operating mode of the VRU ITS-S in the VRU passive mode.

7. The method of claim 6, further comprising receiving a cluster VAM, the cluster VAM comprising a cluster break up indication, the cluster break up indication indicating that the VRU cluster has been at least partially reported in the CPM.

8. The method of any one of claims 1 to 7, wherein determining that the cluster has been at least partially reported in a CPM comprises obtaining a cluster identifier, clusterld, from a data structure of the CPM, and comparing the obtained cluster identifier with an identifier of the cluster.

9. The method of any one of claims 1 to 8, further comprising checking whether a VRU associated with the VRU ITS-S is contained within a group of VRUs identified in the CPM, setting the operating mode to the VRU passive mode being carried out as a response of the checking.

10. The method of claim 9, wherein checking whether the VRU associated with the VRU ITS-S is contained within a group of VRUs identified in the CPM comprises comparing characteristics of the VRU associated with the VRU ITS-S with characteristics of the group of VRUs.

11. The method of claim 10, wherein characteristics of the VRU associated with the VRU ITS-S and characteristics of the group of VRUs comprise a position and/or a velocity.

12. The method of any one of claims 1 to 11, further comprising determining that the VRU cluster is no longer at least partially reported in the CPM and setting the operating mode of the VRU ITS-S to a VRU active standalone mode comprising broadcasting VAMs.

13. A computer program product for a programmable apparatus, the computer program product comprising a sequence of instructions for implementing each of the steps of the method according to any one of claims 1 to 12 when loaded into and executed by the programmable apparatus.

14. A non-transitory computer-readable storage medium storing instructions of a computer program for implementing each of the steps of the method according to any one of claims 1 to 12.

15. An Intelligent Transport System, ITS, station, ITS-S, comprising a processing unit configured for carrying out each of the steps of the method according to any one of claims 1 to 12.
